# FASCICULE DE BREVET EUROPEEN

(11) **EP 2 670 874 B1**
(45) Date de publication et mention de la délivrance du brevet: **28.01.2015**
(21) Numéro de dépôt: 12708756.7
(22) Date de dépôt: 30.01.2012
(51) Int. Cl.: C22B 61/00, G21F 9/06, C01G 55/00, C22B 3/00

(54) **PROCEDE DE SEPARATION D'AU MOINS UN ELEMENT PLATINOÏDE D'UNE SOLUTION AQUEUSE ACIDE COMPRENANT, OUTRE CET ELEMENT PLATINOÏDE, UN OU PLUSIEURS AUTRES ELEMENTS CHIMIQUES**
VERFAHREN ZUR ABSCHEIDUNG VON MINDESTENS EINEM PLATINMETALLELEMENT AUS EINER SAUREN WÄSSRIGEN LÖSUNG MIT EINEM ODER MEHREREN ANDEREN CHEMISCHEN ELEMENTEN NEBEN DIESEM PLATINMETALLELEMENT
PROCESS FOR SEPARATING AT LEAST ONE PLATINOID ELEMENT FROM AN ACIDIC AQUEOUS SOLUTION COMPRISING, BESIDES THIS PLATINOID ELEMENT, ONE OR MORE OTHER CHEMICAL ELEMENTS

(30) Priorité: 03.02.2011 FR 1150871
(43) Date de publication de la demande: 11.12.2013
(73) Titulaire: Commissariat à l'Énergie Atomique et aux Énergies Alternatives, 75015 Paris (FR)
(72) Inventeur: GOETTMANN, Frédéric, F-30133 Les Angles (FR); SMUTEK, Bernhard, 83342 Tacherting (DE); GRANDJEAN, Agnès, F-30330 Saint Marcel De Careiret (FR)
(74) Mandataire: Ahner, Philippe
(86) Numéro de dépôt international: PCT/EP2012/051435
(87) Numéro de publication internationale: WO 2012/104246

(56) Documents cités:
- GB-A- 2 113 252
- US-A- 4 290 967

## Description

### DOMAINE TECHNIQUE

La présente invention a trait à un procédé de séparation d'au moins un élément platinoïde d'une solution aqueuse acide comprenant, outre cet élément platinoïde, un ou plusieurs autres éléments chimiques.

Dans ce qui précède et ce qui suit, on précise que par « élément platinoïde », on entend un élément pouvant être choisi parmi le platine, le palladium, le rhodium, le ruthénium, l'iridium, l'osmium.

L'invention est susceptible de trouver application dans le domaine du traitement et du recyclage des combustibles nucléaires irradiés où elle présente un intérêt tout particulier pour récupérer de façon sélective un élément platinoïde à partir de solutions aqueuses de haute activité comme, par exemple, des raffinats issus du traitement de combustibles nucléaires irradiés.

### ÉTAT DE LA TECHNIQUE ANTÉRIEURE

Les procédés, qui permettent d'extraire et de purifier l'uranium et le plutonium présents dans les liqueurs de dissolution de combustibles nucléaires irradiés, génèrent des effluents auxquels on donne le nom de raffinats.

Ces raffinats sont des solutions aqueuses à forte acidité nitrique, typiquement de 2 à 5 M, qui contiennent deux actinides mineurs, à savoir l'américium et le curium, des lanthanides comme le lanthane, le cérium, le praséodyme, le néodyme, le samarium et l'europium, des produits de fission autres que les lanthanides comme le molybdène, le zirconium, le rubidium, le ruthénium, le rhodium, le palladium et l'yttrium, ainsi que des produits de corrosion comme le fer et le chrome.

Leur gestion consiste actuellement à les concentrer au maximum puis à les conditionner dans des matrices vitreuses en vue d'un entreposage avant un stockage ultime.

Toutefois, la présence d'éléments platinoïdes (tels que le palladium, le rhodium et le ruthénium) génère, au niveau de la vitrification, entre autres, les difficultés suivantes :
- ils présentent une solubilité limitée dans les verres de confinement ;
- ils tendent à former des particules qui précipitent dans les creusets de vitrification et perturbent, de ce fait, fortement le fonctionnement des procédés de vitrification.

C'est pour surmonter ces difficultés et aussi en vue de recycler les éléments platinoïdes (eu égard, notamment, à la raréfaction prévisible des ressources naturelles en ces éléments) que certains auteurs ont mis en place des procédés de récupération de ces éléments à partir d'une solution les contenant en sus également d'autres éléments radioactifs.

Différentes techniques de séparation ont été mises en oeuvre, parmi lesquelles on peut citer :
- des techniques de réduction électrochimique en milieu acide nitrique, de sorte à déposer sur une électrode les éléments platinoïdes, que l'on veut séparer, telles que décrites dans US 2003/0099322, avec, toutefois, pour inconvénient, une mise en oeuvre relativement complexe ;
- des techniques d'extraction liquide-liquide impliquant l'utilisation d'agents extractants, tels que du nitrate de tricaprylméthylammonium (comme décrit dans US 4,162,231) ou du sulfure de dialkyle (comme décrit dans US 5,503,812), ces techniques présentant toutefois l'inconvénient de générer une quantité importante d'effluents secondaires ;
- des techniques de précipitation par réduction chimique des éléments platinoïdes en milieu acide nitrique impliquant l'utilisation d'un réducteur chimique, tel que le saccharose comme US 4,290,967, ce mode de réalisation engendrant des problèmes de réaction de dénitration, laquelle réaction présente un caractère hautement exothermique pouvant être à l'origine d'une auto-inflammation du milieu acide nitrique.

En vue de surmonter les inconvénients inhérents aux techniques mises en oeuvre dans l'art antérieur, les auteurs de la présente invention se sont proposé de mettre au point un nouveau procédé de récupération d'un ou plusieurs éléments platinoïdes contenus dans une solution aqueuse acide, par exemple, une solution aqueuse nitrique, comprenant d'autres éléments chimiques, tels que des éléments radioactifs.

Ils ont ainsi découvert, de façon surprenante, qu'en utilisant certains alcools organiques, il est possible d'extraire sélectivement les éléments platinoïdes contenus dans une solution aqueuse acide, par une mise en oeuvre simple et peu coûteuse, sans que cela génère de grandes quantités d'effluents secondaires et sans que cela n'induise les inconvénients liés à d'importantes réactions de dénitration, lorsque la solution aqueuse acide est une solution aqueuse nitrique.

### EXPOSÉ DE L'INVENTION

Ainsi l'invention a trait à un procédé de récupération d'au moins un élément platinoïde contenu dans une solution aqueuse acide comprenant d'autres éléments chimiques que ledit élément platinoïde, ledit procédé comprenant les étapes suivantes :
- une étape de mise en contact de ladite solution aqueuse acide avec une quantité réductrice d'un agent réducteur qui est un composé alcoolique non soufré et non glucidique choisi parmi les alcools cycliques, éventuellement aromatiques, et les polyols aliphatiques, moyennant quoi ledit élément platinoïde est réduit à son degré d'oxydation 0 ;
- une étape de séparation dudit élément platinoïde ainsi réduit de ladite solution aqueuse acide.

Avant d'entrer plus en détail dans la description de l'invention, nous précisons les définitions suivantes.

Dans ce qui précède et ce qui suit, on entend, par élément platinoïde, un élément métallique existant sous un degré d'oxydation différent de 0, lequel élément métallique est choisi parmi le platine, le palladium, le rhodium, le ruthénium, l'iridium, l'osmium.

Grâce au choix d'alcools spécifiques utilisés dans des quantités spécifiques (à savoir, des quantités permettant la réduction à son degré d'oxydation 0 du ou des éléments platinoïdes présents dans la solution aqueuse acide), il est possible d'obtenir une réduction sélective du ou desdits éléments platinoïdes par rapport à d'autres éléments chimiques présents dans la solution aqueuse acide, sans qu'il y ait de pollution de ladite solution par du soufre (du fait que les alcools sont non soufrés), ce qui serait rédhibitoire pour la vitrification de la solution ainsi obtenue après extraction desdits éléments platinoïdes.

Comme mentionné ci-dessus, les alcools non soufrés et non glucidiques utilisables pour le procédé de l'invention peuvent être des alcools cycliques, éventuellement aromatiques, soit en d'autres termes :
*des composés hydrocarbonés cycliques, éventuellement aromatiques, comprenant au moins un cycle porteur directement d'au moins un groupe hydroxyle ; ou
*des composés hydrocarbonés cycliques, éventuellement aromatiques, dont le cycle est porteur d'au moins un groupe hydrocarboné, linéaire ou ramifié, saturé ou insaturé, lequel groupe hydrocarboné est porteur d'au moins un groupe hydroxyle.

Concernant les composés hydrocarbonés cycliques, comprenant au moins un cycle porteur directement d'au moins un groupe hydroxyle, on peut citer des composés alicycliques et monocycliques comprenant de 4 à 10 atomes de carbone, porteur d'au moins un groupe hydroxyle. A titre d'exemple de composés conformes à cette définition, on peut citer le cyclohexanol.

Concernant les composés hydrocarbonés cycliques, éventuellement aromatiques, dont le cycle est porteur d'au moins un groupe hydrocarboné, linéaire ou ramifié, saturé ou insaturé, porteur d'au moins un groupe hydroxyle, on peut citer des composés aromatiques monocycliques, dont le cycle est porteur d'au moins un groupe hydrocarboné, linéaire ou ramifié, porteur d'au moins un groupe hydroxyle et dont le cycle est également éventuellement porteur d'un ou plusieurs groupes autres que le groupe hydrocarboné susmentionné, tels que des groupes alcoxy, -OH.

Plus précisément, il peut s'agir de composés phényliques, dont le groupe phényle est porteur d'au moins un groupe hydrocarboné, linéaire ou ramifié, saturé ou insaturé, pouvant comprendre de 4 à 10 atomes de carbone, lequel groupe hydrocarboné est porteur d'au moins un groupe hydroxyle, lequel groupe phényle peut être également porteur d'un ou plusieurs groupes autres que le groupe hydrocarboné susmentionné.

Selon une première variante, des composés spécifiques conformes à la définition donnée ci-dessus peuvent être des composés phényliques, dont le groupe phényle est porteur d'un groupe hydrocarboné, linéaire ou ramifié, saturé comportant de 1 à 4 atomes de carbone, lequel groupe hydrocarboné est porteur d'un groupe hydroxyle.

Plus précisément, des composés spécifiques conformes à cette définition peuvent être des composés phényliques, dont le groupe phényle est porteur d'un groupe -CH₂-OH et éventuellement d'au moins un groupe choisi parmi les groupes alcoxy ou -OH.

Lorsque le composé consiste en un groupe phényle, porteur uniquement d'un groupe -CH₂OH, il correspond à l'alcool benzylique de formule suivante :

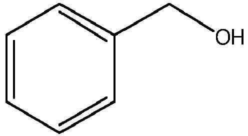

D'autres composés spécifiques conformes à cette définition peuvent être des composés phényliques, dont le groupe phényle est porteur d'un groupe -CH(OH)-CH₃ et éventuellement d'au moins un groupe choisi parmi les groupes alcoxy ou -OH.

Lorsque le composé consiste en un groupe phényle, porteur uniquement d'un groupe -CH(OH)-CH₃, il correspond à l'alcool de formule suivante : 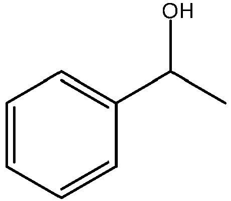 communément désigné sous la terminologie de 1-phényl-1-éthanol.

Lorsque le composé consiste en un groupe phényle, porteur d'un groupe -CH₂OH et d'au moins un groupe autre qu'un groupe -CH₂OH, il peut correspondre à un dérivé d'alcool benzylique de formule suivante : 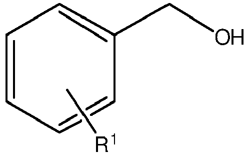 dans laquelle R¹ est un groupe alcoxy ou un groupe hydroxyle.

R¹ peut être situé en position ortho, méta ou para par rapport au groupe -CH₂-OH.

Avantageusement, R₁ est situé en position para par rapport au groupe -CH₂-OH, auquel cas le composé répond à la formule suivante : 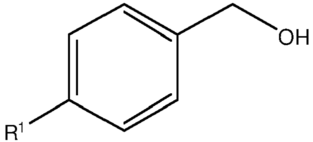 R¹ étant tel que défini ci-dessus.

Des composés spécifiques répondant à la définition donnée ci-dessus peuvent être l'alcool 4-méthoxybenzylique ou l'alcool 4-hydroxybenzylique, lesquels correspondent respectivement aux formules suivantes :

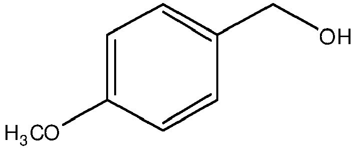

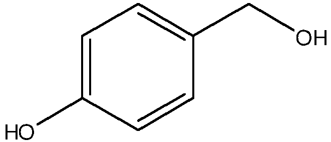

Selon une deuxième variante, des composés spécifiques répondant à la définition donnée ci-dessus (à savoir, des composés appartenant à la famille des composés phényliques, dont le groupe phényle est porteur d'au moins un groupe hydrocarboné, linéaire ou ramifié, saturé ou insaturé, pouvant comprendre de 1 à 4 atomes de carbone, lequel groupe est porteur d'au moins un groupe hydroxyle) peuvent être des composés phényliques, dont le groupe phényle est porteur d'au moins un groupe hydrocarboné, linéaire ou ramifié, insaturé pouvant comprendre de 2 à 4 atomes de carbone, lequel groupe hydrocarboné est porteur d'au moins un groupe hydroxyle.

Plus précisément, des composés spécifiques conformes à cette définition peuvent être des composés phényliques, dont le groupe phényle est porteur d'un groupe hydrocarboné, linéaire ou ramifié, monoinsaturé pouvant comprendre de 2 à 4 atomes de carbone, tel qu'un groupe -CH=CH-CH₂-OH, un exemple spécifique de tels composés étant l'alcool cinnamylique de formule suivante :

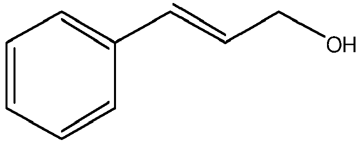

Comme mentionné ci-dessus, les alcools non soufrés et non glucidiques utilisables pour le procédé de l'invention peuvent être des polyols aliphatiques, à savoir des composés hydrocarbonés, linéaires ou ramifiés, comprenant au moins deux groupes hydroxyles. Ces composés peuvent comprendre de 2 à 4 atomes de carbone.

Avantageusement, ces composés peuvent être l'éthylène glycol ou la glycérine de formules respectives suivantes :

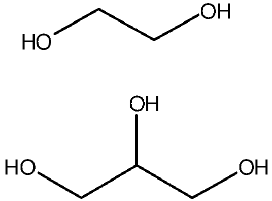

En particulier, l'élément platinoïde selon l'invention peut être le palladium.

La quantité réductrice d'agent réducteur nécessaire pour réduire le ou les éléments platinoïdes à leur degré d'oxydation 0 peut être choisie par l'homme du métier, par des essais expérimentaux simples (la réduction à l'état d'oxydation 0 pouvant se matérialiser visuellement par une précipitation du ou des éléments platinoïdes).

Selon l'invention, la solution aqueuse acide peut être une solution nitrique (soit, en d'autres termes, une solution aqueuse d'acide nitrique).

Dans ce cas de figure, l'utilisation d'alcools spécifiques tels que définis ci-dessus contribue à éviter, en plus, les réactions de dénitration fortement exothermiques de la solution nitrique, lesquelles sont classiquement engendrées par la présence dans une solution nitrique de glucides réducteurs (comme le saccharose).

Selon l'invention, la solution nitrique destinée à être traiter selon le procédé de l'invention peut être un raffinat (ou solution aqueuse) issu de procédés de traitement de combustibles nucléaires irradiés, lequel procédé comprend classiquement:
- une étape de dissolution dans une solution aqueuse d'acide nitrique très concentrée d'un combustible usé, moyennant quoi l'on obtient une solution aqueuse nitrique comprenant de l'uranium, du plutonium, des produits de fission (tels que des éléments lanthanides, de l'yttrium, un ou plusieurs éléments platinoïdes), des actinides mineurs (tels que l'américium et le curium), des produits de corrosion;
- une étape de coextraction de l'uranium et du plutonium de ladite solution aqueuse au moyen d'une phase organique extractante, à l'issue de laquelle il subsiste une phase organique comprenant l'uranium et le plutonium et une phase aqueuse correspondant au raffinat susmentionné comprenant, outre le ou les éléments platinoïdes susmentionnés (tel que palladium, le ruthénium, le rhodium), deux actinides mineurs, à savoir l'américium et le curium, des lanthanides comme le lanthane, le cérium, le praséodyme, le néodyme, le samarium et l'europium, des produits de fission autres que les lanthanides et les platinoïdes comme le molybdène, le zirconium, le rubidium et l'yttrium, ainsi que des produits de corrosion comme le fer et le chrome.

La solution aqueuse d'acide nitrique peut être une solution aqueuse à forte acidité nitrique, typiquement de 2 à 5 M.

Une fois l'étape d'ajout d'un agent réducteur mise en oeuvre, le procédé de l'invention comprend une étape de séparation dudit élément platinoïde ainsi réduit de ladite solution aqueuse acide, cette étape pouvant être réalisée, par exemple, par une simple filtration, une opération de décantation ou une opération de centrifugation.

La solution ainsi obtenue débarrassée de tout ou partie des éléments platinoïdes peut être ensuite utilisée en vue d'être vitrifiée par un processus classique de vitrification.

L'invention va maintenant être décrite par rapport aux exemples suivants donnés à titre illustratif et non limitatif.

### BRÈVE DESCRIPTION DES DESSINS

La figure 1 illustre l'évolution de la quantité de palladium C1 (en g/L) en fonction de la quantité ajoutée d'alcool benzylique B1 (en g) après 16 heures de réaction, dans le cadre de l'exemple 1 ci-dessous.
La figure 2 illustre l'évolution de la quantité de cérium C2 (en g/L) en fonction de la quantité ajoutée d'alcool benzylique B2 (en g) après 16 heures de réaction, dans le cadre de l'exemple 1 ci-dessous.
La figure 3 illustre la concentration des ions métalliques (palladium et cérium) restés en solution C3 (en g/L) après chauffage à 150°C pendant 16 heures pour les différents alcools testés dans l'exemple 2.

### EXPOSÉ DÉTAILLÉ DE MODES DE RÉALISATION PARTICULIERS

### EXEMPLE 1

Le présent exemple a pour but l'étude de la séparation palladium/cérium en solution nitrique mettant en oeuvre l'utilisation de l'alcool benzylique.

Dans cet exemple, on utilise du chlorure de palladium ( (NH₄)₂PdCl₄) et du nitrate de cérium (Ce(NO₃)₃), le palladium étant un élément platinoïde et le cérium étant un des produits de fission présents dans les raffinats et considéré comme représentatif de tous les lanthanides.

Pour chacun des tests de cet exemple, on utilise 10 mL d'une solution d'acide nitrique à 1 mol/L dans laquelle on ajoute 71 mg de chlorure de palladium et 87 mg de nitrate de cérium soit 0,2 mmol de palladium et 0,2 mmol de cérium. Après ajout de la quantité voulue d'alcool benzylique, les solutions sont placées dans des bombes de digestion Parr et chauffées à une température voulue pendant 16 heures.

Différentes séries de tests sont effectuées avec des quantités variables d'alcool benzylique à une température donnée :
- une série de tests à 150°C avec des quantités d'alcool benzylique respectives de 0 ; 0,35 ; 0, 4 ; 0, 5 et 0,7 g;
- une série de tests à 180°C avec des quantités d'alcool benzylique respectives de 0 ; 0,35 ; 0, 4 ; 0, 5 et 0,7 g.

Pour chacune de ces séries, il a été procédé respectivement à la mesure (par ICP-AES) de la quantité de palladium et de la quantité de cérium après 16 heures de réaction, les résultats de ces mesures étant reportés respectivement sur les figures suivantes:

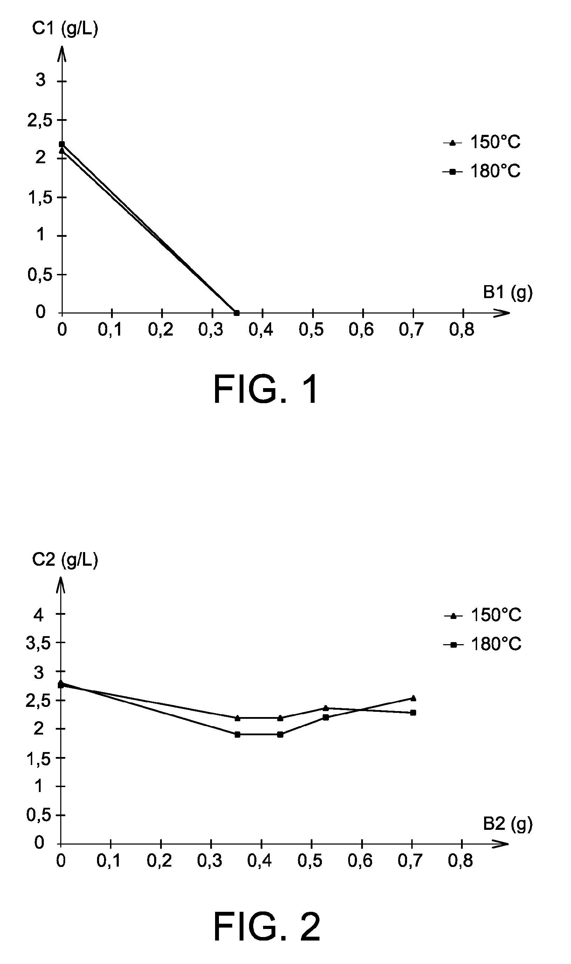

- la figure 1 illustrant l'évolution de la quantité de palladium C1 (en g/L) en fonction de la quantité ajoutée d'alcool benzylique B1 (en g) après 16 heures de réaction;
- la figure 2 illustrant l'évolution de la quantité de cérium C2 (en g/L) en fonction de la quantité ajoutée d'alcool benzylique B2 (en g) après 16 heures de réaction.

Comme on peut le constater sur ces figures, une température de 180°C permet de précipiter tout le palladium pour des quantités d'alcool benzylique à partir de 0,3 g et aussi une quantité non négligeable de cérium, tandis qu'une température de 150°C permet de précipiter tout le palladium à partir d'alcool benzylique à partir de 0,3 g tant en permettant une précipitation du cérium en des quantités moindres qu'à 180°C.

Il a également été constaté que le palladium précipite sous forme de particules d'une centaine de nanomètres de diamètre au sein d'une matrice organique constituée d'un polymère aromatique issu de la polycondensation de l'alcool benzylique et de ses produits d'oxydation. La formation de cette matrice facilite grandement la séparation entre la solution contenant le cérium et le palladium ayant précipité. Par ailleurs, on ne constate pas de surpression sensible dans le réacteur en fin de réaction, ce qui atteste de l'absence de dénitration ou, à tout le moins, d'un phénomène de dénitration très limitée, ce qui prouve l'aspect sécuritaire du procédé de l'invention.

### EXEMPLE 2

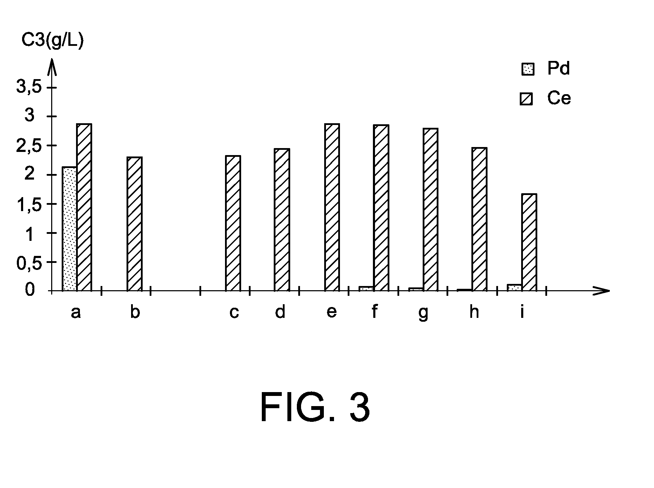

Le présent exemple a pour but l'étude de la séparation palladium/cérium en solution nitrique mettant en oeuvre l'utilisation de différents alcools : l'alcool benzylique (partie b de la figure 3), l'alcool 4-méthoxybenzylique (partie c de la figure 3), la glycérine (partie d de la figure 3), le 1-phényl-1-éthanol (partie e de la figure 3), l'éthylèneglycol (partie f de la figure 3), l'alcool cinnamylique (partie g de la figure 3), l'alcool 4-hydroxybenzylique (partie h de la figure 3) et le cyclohexanol (partie i de la figure 3). Un test a été effectué sans alcool (partie a de la figure 3).

Dans cet exemple, on utilise du chlorure de palladium ( (NH₄)₂PdCl₄) et du nitrate de cérium (Ce(NO₃)₃), le palladium étant un élément platinoïde et le cérium étant un des produits de fission présents dans les raffinats et considéré comme représentatif de tous les lanthanides.

Pour chacun des tests de cet exemple, on utilise 10 mL d'une solution d'acide nitrique à 1 mol/L dans laquelle on ajoute 71 mg de chlorure de palladium et 87 mg de nitrate de cérium soit 0,2 mmol de palladium et 0,2 mmol de cérium. Après ajout de la quantité voulue d'alcool (ici, 4,8 mmol), les solutions sont placées dans des bombes de digestion Parr et chauffées à une température de 150°C pendant 16 heures.

La figure 3 illustre la concentration des ions métalliques (palladium et cérium) restés en solution (en g/L) après chauffage à 150°C pendant 16 heures pour les différents alcools testés susmentionnés.

Comme il ressort de cette figure, tous les alcools testés présentent une bonne sélectivité vis-à-vis du palladium.

### EXEMPLE 3

Afin de se rapprocher le plus possible d'un système rencontré dans le traitement des effluents aqueux issus du retraitement des combustibles usés, il a été procédé à des essais de précipitation sélective du palladium sur une solution modèle d'acide nitrique (1,5 M) correspondant à la composition décrite dans le tableau ci-dessous et une charge totale en nitrates de 3,5 mol/L.

| Oxyde utilisé | Concentration en oxyde (g/L) | Elément métallique | Concentration en élément métallique (g/L) |
|---|---|---|---|
| Na₂O | 18,739 | Na | 13,90 |
| Al₂O₃ | 7,378 | Al | 3,90 |
| ZnO | 0,209 | Zn | 0,17 |
| ZrO₂ | 9,479 | Zr | 7,02 |
| TeO₂ | 1,272 | Te | 1,02 |
| Cs₂O | 5,757 | Cs | 5,43 |
| SrO | 1,703 | Sr | 1,44 |
| BaO | 3,632 | Ba | 3,25 |
| SnO₂ | 0,128 | Sn | 0,10 |
| Cr₂O₃ | 0,222 | Cr | 0,15 |
| Fe₂O₃ | 1,698 | Fe | 1,19 |
| MnO₂ | 1,997 | Mn | 1,26 |
| La₂O₃ | 6,444 | La | 5,49 |
| Nd₂O₃ | 14,878 | Nd | 12,75 |
| Ce₂O₃ | 5,195 | Ce | 4,44 |
| Pr₂O₃ | 2,821 | Pr | 2,41 |
| MoO₃ | 9,413 | Mo | 6,27 |
| P₂O₅ | 0,925 | P | 0,40 |
| - | - | Pd | 2,98 |
| Total | 91,89 | | 70,61 |

Pour réaliser les essais, 10 mL de la solution ont été utilisés. Après ajout de 500 mg d'alcool benzylique, la solution a été placée dans une bombe de digestion Parr et chauffée à 150°C pendant 16 heures. Cette manipulation a été réalisée 4 fois pour pallier d'éventuelles erreurs expérimentales.

Les quantités de palladium et de cérium présentes dans la solution en fin d'essai ont été mesurées par ICP-AES (c'est-à-dire par spectroscopie d'émission atomique). Les résultats moyens calculés sur la base de 4 essais sont les suivants :
*Palladium 0,05 g/L
*Cérium 4,09 g/L

Comme il ressort de ces résultats, le palladium a été presque totalement éliminé, alors que le cérium subsiste très largement dans la solution.

## Revendications

1. Procédé de récupération d'au moins un élément platinoïde contenu dans une solution aqueuse acide comprenant d'autres éléments chimiques que ledit élément platinoïde, ledit procédé comprenant les étapes suivantes :
- une étape de mise en contact de ladite solution aqueuse acide avec une quantité réductrice d'un agent réducteur qui est un composé alcoolique non soufré et non glucidique choisi parmi les alcools cycliques, éventuellement aromatiques, et les polyols aliphatiques, moyennant quoi ledit élément platinoïde est réduit à son degré d'oxydation 0 ;
- une étape de séparation dudit élément platinoïde ainsi réduit de ladite solution aqueuse acide.

2. Procédé selon la revendication 1, dans lequel les alcools cycliques, éventuellement aromatiques sont des composés hydrocarbonés cycliques, éventuellement aromatiques, comprenant au moins un cycle porteur directement d'au moins un groupe hydroxyle.

3. Procédé selon la revendication 2, dans lequel les composés hydrocarbonés cycliques, éventuellement aromatiques, comprenant au moins un cycle porteur directement d'au moins un groupe hydroxyle, sont des composés alicycliques et monocycliques comprenant de 4 à 10 atomes de carbone, porteur d'au moins un groupe hydroxyle.

4. Procédé selon la revendication 1, dans lequel les alcools cycliques, éventuellement aromatiques sont des composés hydrocarbonés cycliques, éventuellement aromatiques, dont le cycle est porteur d'au moins un groupe hydrocarboné, linéaire ou ramifié, saturé ou insaturé, porteur d'au moins un groupe hydroxyle.

5. Procédé selon la revendication 4, dans lequel lesdits composés sont des composés aromatiques monocycliques, dont le cycle est porteur d'au moins un groupe hydrocarboné, linéaire ou ramifié, saturé ou insaturé, porteur d'au moins un groupe hydroxyle et dont le cycle est également éventuellement porteur d'un ou plusieurs groupes autres que le groupe hydrocarboné susmentionné, tels que des groupes alcoxy, -OH.

6. Procédé selon la revendication 5, dans lequel lesdits composés sont des composés phényliques, dont le groupe phényle est porteur d'au moins un groupe hydrocarboné, linéaire ou ramifié, saturé ou insaturé, pouvant comprendre de 1 à 4 atomes de carbone, lequel groupe hydrocarboné est porteur d'au moins un groupe hydroxyle, lequel groupe phényle peut être également porteur d'un ou plusieurs groupes autres que le groupe hydrocarboné susmentionné.

7. Procédé selon la revendication 6, dans lequel lesdits composés sont des composés phényliques, dont le groupe phényle est porteur d'un groupe -CH₂-OH et éventuellement d'au moins un groupe choisi parmi les groupes alcoxy ou -OH.

8. Procédé selon la revendication 7, dans lequel un tel composé correspond à un dérivé d'alcool benzylique de formule suivante : 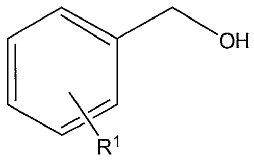 dans laquelle R¹ est un groupe alcoxy ou un groupe hydroxyle.

9. Procédé selon la revendication 8, dans lequel R¹ est situé en position ortho, méta ou para par rapport au groupe -CH₂-OH.

10. Procédé selon la revendication 8 ou 9, dans lequel R₁ est situé en position para par rapport au groupe -CH₂-OH, auquel cas le composé répond à la formule suivante : 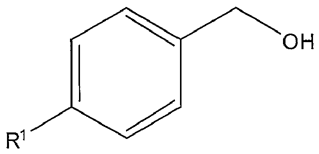 R¹ étant tel que défini à la revendication 8.

11. Procédé selon la revendication 6, lequel lesdits composés sont des composés phényliques, dont le groupe phényle est porteur d'un groupe -CH(OH)-CH₃ et éventuellement d'au moins un groupe choisi parmi les groupes alcoxy ou -OH.

12. Procédé selon la revendication 6, dans lequel de tels composés sont des composés phényliques, dont le groupe phényle est porteur d'au moins un groupe hydrocarboné, linéaire ou ramifié, insaturé pouvant comprendre de 2 à 4 atomes de carbone.

13. Procédé selon la revendication 12, dans lequel de tels composés sont des composés phényliques, dont le groupe phényle est porteur d'un groupe -CH=CH-CH₂-OH.

14. Procédé selon la revendication 1, dans lequel les polyols aliphatiques comprennent de 2 à 4 atomes de carbone.

15. Procédé selon l'une quelconque des revendications précédentes, dans lequel l'élément platinoïde est le palladium.

16. Procédé selon l'une quelconque des revendications précédentes, dans lequel la solution aqueuse acide est une solution nitrique.

17. Procédé selon la revendication 16, dans lequel la solution nitrique est un raffinat issu de procédés de traitement de combustibles nucléaires irradiés.

## Patentansprüche

1. Verfahren zur Wiedergewinnung wenigstens eines Platinmetallelements, das in einer andere chemische Elemente als dieses Platinmetallelement umfassenden sauren, wässrigen Lösung enthalten ist, wobei das Verfahren die folgenden Schritte umfasst:
- einen Schritt des In-Kontakt-Bringens der sauren, wässrigen Lösung mit einer reduzierenden Menge eines Reduktionsmittels, mit einer Alkoholverbindung, die keinen Schwefel enthält und kein Zucker ist, und aus cyclischen, gegebenenfalls aromatischen Alkoholen und aliphatischen Polyolen ausgewählt ist, wodurch dieses Platinmetallelent zur Oxidationsstufe 0 reduziert wird, und
- einen Schritt der Abtrennung des auf diese Weise reduzierten Platinmetallelements aus dieser sauren, wässrigen Lösung.

2. Verfahren gemäß Anspruch 1, bei dem die cyclischen, gegebenenfalls aromatischen Alkohole gegebenenfalls aromatische, cyclische Kohlenwasserstoffverbindungen mit wenigstens einem Ring umfassen, der direkt eine Hydroxygruppe trägt.

3. Verfahren gemäß Anspruch 2, bei dem die gegebenenfalls aromatischen, cyclischen Kohlenwasserstoffverbindungen mit wenigstens einem Ring, der direkt eine Hydroxygruppe trägt, 4 bis 10 Kohlenstoffatome umfassende, alicyclische und monocyclische Verbindungen sind, die wenigstens eine Hydroxygruppe tragen.

4. Verfahren gemäß Anspruch 1, bei dem die gegebenenfalls aromatischen, cyclischen Alkohole gegebenenfalls aromatische, cyclische Kohlenwasserstoffverbindungen sind, deren Ring wenigstens eine gesättigte oder ungesättigte, gerade oder verzweigte Kohlenwasserstoffgruppe trägt, die wenigstens eine Hydroxygruppe trägt.

5. Verfahren gemäß Anspruch 4, bei dem diese Verbindungen monocyclische, aromatische Verbindungen sind, deren Ring wenigstens eine gesättigte oder ungesättigte, gerade oder verzweigte Kohlenwasserstoffgruppe trägt, die wenigstens eine Hydroxygruppe trägt und deren Ring auch gegebenenfalls eine oder mehrere andere Gruppen als die erwähnten Kohlenwasserstoffgruppen, wie etwa Alkoxygruppen und die Gruppe -OH tragen.

6. Verfahren gemäß Anspruch 5, bei dem diese Verbindungen Phenylverbindungen sind, deren Phenylgruppe wenigstens eine gesättigte oder ungesättigte, gerade oder verzweigte Kohlenwasserstoffgruppe trägt, die 1 bis 4 Kohlenstoffatome umfassen kann, wobei die Kohlenwasserstoffgruppe wenigstens eine Hydroxygruppe trägt und diese Phenylgruppen auch eine oder mehrere andere Gruppen als die vorgenannte Kohlenwasserstoffgruppe tragen können.

7. Verfahren gemäß Anspruch 6, bei dem diese Verbindungen Phenylverbindungen sind, deren Phenylgruppe eine Gruppe -CH₂-OH und gegebenenfalls eine aus einer Alkoxygruppe oder Gruppe -OH ausgewählte Gruppe trägt.

8. Verfahren gemäß Anspruch 7, bei dem eine solche Verbindung einem Benzylalkoholderivat der folgenden Formel entspricht: 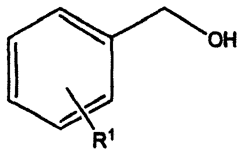 worin R¹ eine Alkoxygruppe oder eine Hydroxygruppe ist.

9. Verfahren gemäß Anspruch 8, bei dem sich R¹ in ortho-, meta- oder paraStellung bezüglich der Gruppe -CH₂-OH befindet.

10. Verfahren gemäß Anspruch 8 oder 9, bei dem sich R¹ in para-Stellung bezüglich der Gruppe -CH₂-OH befindet und die Verbindung in dem Fall der folgenden Formel entspricht: 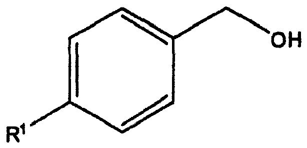 und R¹ wie in Anspruch 8 definiert ist.

11. Verfahren gemäß Anspruch 6, bei dem diese Verbindungen Penylverbindungen sind, deren Phenylgruppe eine Gruppe -CH(OH)-CH₃ und gegebenenfalls wenigstens eine aus Alkoxygruppe oder Gruppe -OH ausgewählte Gruppe trägt.

12. Verfahren gemäß Anspruch 6, bei dem derartige Verbindungen Phenylverbindungen sind, deren Phenylgruppe wenigstens eine ungesättigte, gerade oder verzweigte Kohlenwasserstoffgruppe trägt, die 2 bis 4 Kohlenstoffatome umfassen kann.

13. Verfahren gemäß Anspruch 12, bei dem derartige Verbindungen Phenylverbindungen sind, deren Phenylgruppe eine Gruppe -CH=CH-CH₂-OH trägt.

14. Verfahren gemäß Anspruch 1, bei dem die aliphatischen Polyole 2 bis 4 Kohlenstoffatome umfassen.

15. Verfahren gemäß einem der vorangehenden Ansprüche, bei dem das Platinmetallelement Palladium ist.

16. Verfahren gemäß einem der vorangehenden Ansprüche, bei dem die saure, wässrige Lösung eine salpetersaure Lösung ist.

17. Verfahren gemäß Anspruch 16, bei dem die salpetersaure Lösung eine aus der Behandlung bestrahlter Kernbrennstoffe stammende Aufarbeitungslösung ist.

## Claims

1. Method for recovering at least one platinoid element contained in an acidic aqueous solution comprising chemical elements other than said platinoid element, said process comprising the following steps:
- a step of bringing said acidic aqueous solution into contact with a reducing amount of a reducing agent which is a non-sulphurous and non-glucidic alcoholic compound chosen from cyclic, optionally aromatic, alcohols and aliphatic polyols, by means of which said platinoid element is reduced to its 0 oxidation state;
- a step of separating said thus reduced platinoid element from said acidic aqueous solution.

2. Process according to claim 1, wherein cyclic, optionally aromatic, alcohols are cyclic, optionally aromatic, hydrocarbon compounds comprising at least one ring directly bearing at least one hydroxyl group.

3. Process according to claim 2, wherein the cyclic, optionally aromatic, hydrocarbon compounds comprising at least one ring directly bearing at least one hydroxyl group, are alicyclic and monocyclic compounds comprising from 4 to 10 carbon atoms, bearing at least one hydroxyl group.

4. Process according to claim 1, wherein the cyclic, optionally aromatic, alcohols are cyclic, optionally aromatic, hydrocarbon compounds, the ring of which bears at least one, linear or branched, saturated or unsaturated hydrocarbon group, bearing at least one hydroxyl group.

5. Process according to claim 4, wherein said compounds are monocyclic aromatic compounds, the ring of which bears at least one, linear or branched, saturated or unsaturated hydrocarbon group, bearing at least one hydroxyl group and the ring of which also optionally bears one or more groups other than the aforementioned hydrocarbon group, such as alkoxy, -OH groups.

6. Process according to claim 5, wherein said compounds are phenylic compounds, the phenyl group of which bears at least one, linear or branched, saturated or unsaturated hydrocarbon group, being able to comprise from 1 to 4 carbon atoms, which hydrocarbon group bears at least one hydroxyl group, which phenyl group may also bear one or more groups other than the aforementioned hydrocarbon group.

7. Process according to claim 6, wherein said compounds are phenylic compounds, the phenyl group of which bears a -CH₂-OH group and optionally at least one group chosen from alkoxy or -OH groups.

8. Process according to claim 7, wherein such a compound corresponds to a benzylic alcohol derivative of following formula: 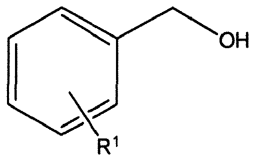 in which R¹ is an alkoxy group or a hydroxyl group.

9. Process according to claim 8, wherein R¹ is situated in ortho, meta or para position with respect to the -CH₂-OH group.

10. Process according to claim 8 or 9, wherein R₁ is situated in para position with respect to the -CH₂-OH group, in which case the compound meets the following formula: 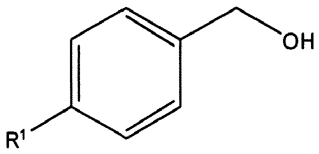 R¹ being as defined in claim 8.

11. Process according to claim 6, wherein said compounds are phenylic compounds, the phenyl group of which bears a -CH(OH)-CH₃ group and optionally at least one group chosen from alkoxy or -OH groups.

12. Process according to claim 6, wherein such compounds are phenylic compounds, the phenyl group of which bears at least one, linear or branched, unsaturated hydrocarbon group being able to comprise from 2 to 4 carbon atoms.

13. Process according to claim 12, wherein such compounds are phenylic compounds, the phenyl group of which bears a -CH=CH-CH₂-OH group.

14. Process according to claim 1, wherein the aliphatic polyols comprise from 2 to 4 carbon atoms.

15. Process according to any of the preceding claims, wherein the platinoid element is palladium.

16. Process according to any of the preceding claims, wherein the acidic aqueous solution is a nitric solution.

17. Process according to claim 16, wherein the nitric solution is a raffinate from processes of treating irradiated nuclear fuels.
